# EUROPEAN PATENT SPECIFICATION

(11) **EP 3 170 738 B1**
(45) Date of publication and mention of the grant of the patent: **08.04.2020**
(21) Application number: 15195570.5
(22) Date of filing: 20.11.2015
(51) Int. Cl.: B64C 1/06, B64D 13/04, B64C 1/00

(54) **DECOMPRESSION ASSEMBLY WITH AN AIR CHANNEL**
DEKOMPRIMIERUNGSANORDNUNG MIT EINEM LUFTKANAL
ENSEMBLE DE DÉCOMPRESSION AVEC UN CANAL D'AIR

(43) Date of publication of application: 24.05.2017
(73) Proprietor: Airbus Operations GmbH, 21129 Hamburg (DE)
(72) Inventor: SCHNEIDER, Uwe, 21129 Hamburg (DE)
(74) Representative: Schicker, Silvia

(56) References cited:
- EP-A1- 0 420 306
- EP-A2- 2 492 190
- US-A- 4 432 514
- US-A1- 2012 043 421

## Description

The invention relates to a decompression assembly for use in an aircraft, for example a passenger aircraft. Furthermore, the invention relates to an aircraft which is equipped with a decompression assembly of this kind.

Passenger aircraft currently in use comprise a pressurized cabin, the internal pressure of which, during flight operation of the aircraft, is maintained, for example by means of an air conditioning system, at a pressure level that is increased compared to the ambient pressure, i.e. the reduced atmospheric pressure at high altitudes. Generally, the pressure in the interior of the cabin of a passenger aircraft while the aircraft is flying at cruising altitude usually corresponds approximately to the atmospheric pressure at an altitude of 8000 ft (ca. 2400 m). The conditioning air supplied by the aircraft air conditioning system is conventionally fed into the cabin through air inlet ducts, which open out into the cabin above the passenger seats in the region of ceiling lining panels and/or side lining panels of the cabin lining. The exhaust air from the cabin usually is discharged through air outlet ducts, which are disposed in the region of a cabin floor or a portion of the side lining panels that is situated near the floor. In order to avoid damage to the cabin lining, in particular to the side lining panels, in the event of a decompression, i.e. in the event of a pressure drop in a region of the aircraft cabin which is kept at an increased pressure during flight, a mutual pressure equalisation between an inner region of the aircraft cabin which is delimited by the side lining panels of the cabin lining and a region of the aircraft lying between the side lining panels of the cabin lining and the aircraft outer skin must be possible.

DE 10 2009 012 015 A1, EP 2 403 756 A1 and US 8,955,803 B2 describe a dado panel with an integrated flap mechanism which, in the event of a sudden pressure drop in an aircraft region lying between the side lining panels of the cabin lining and the aircraft outer skin, opens a pressure equalizing opening, through which air can flow out of the inner region of the aircraft cabin delimited by the side lining panels into the aircraft region between the side lining panels and the aircraft outer skin, which is affected by the decompression. In the event of a decompression in the inner region of the aircraft cabin delimited by the side lining panels, an air outlet duct which, during normal operation of the aircraft, serves to discharge exhaust air from the interior of the cabin into the region of the aircraft lying between the side lining panels and the aircraft outer skin is utilized to lead air out of the region of the aircraft lying between the side lining panels and the aircraft outer skin into the inner region of the aircraft cabin affected by the sudden pressure drop in order to allow a pressure equalization.

DE 10 2011 011 976 B4 and US 9,022,321 B2 disclose a decompression arrangement comprising a first cabin lining element that extends, in at least some sections, substantially parallel with an aircraft outer skin and includes a lower edge region provided at a distance from a floor of the aircraft, wherein the first cabin lining element extends from the lower edge region generally upwardly in a direction of a ceiling of the aircraft. A second cabin lining element is positioned between the first cabin lining element and the aircraft outer skin, wherein the second cabin lining element includes an upper edge region positioned between the lower edge region of the first cabin lining element and the aircraft outer skin. The second cabin lining element extends downwardly from the upper edge region in a direction of the floor of the aircraft. An air discharge opening is arranged between the lower edge region of the first cabin lining element and the upper edge region of the second cabin lining element and is adapted, in the normal operation of the aircraft, to discharge air from the inner region of the cabin into a region of the aircraft lying between the first and second cabin lining elements and the aircraft outer skin.

A decompression element is integrated in the second cabin lining element and has a flap which, in a closed position, closes a pressure equalizing opening formed in the decompression element. The flap is configured to, if a first predetermined differential pressure acts on the decompression element, pivot about an axis in a first direction from the closed position into a first open position, wherein in the first open position the flap opens the pressure equalizing opening formed in the decompression element. Further, the flap is configured to, if a second predetermined differential pressure acts on the decompression element, pivot about the axis in a second direction opposite the first direction into a second open position, wherein in the second open position the flap opens the pressure equalizing opening formed in the decompression element. The decompression element is positioned relative to the first and the second cabin lining elements in such a manner that the flap in its second open position keeps clear a through-flow cross-section of the air discharge opening.

US 4,432,514 discloses a decompression assembly according to the preamble of claim 1.

The invention is directed at the object of providing a space optimized decompression assembly. Further, the invention is directed at the object of providing an aircraft which is equipped with a decompression assembly of this kind.

These objects are addressed by a decompression assembly as defined in claim 1 and an aircraft as defined in claim 14.

A decompression assembly for use in an aircraft comprises a cabin lining element. The cabin lining element may be a decorative lining element which extends in the region of a side wall of an aircraft passenger cabin, in particular close to a passenger cabin floor. An opening is formed in the cabin lining element. For example, the opening may be formed in a region of the cabin lining element which, when the cabin lining element is installed in an aircraft cabin, faces the cabin floor and thus is arranged in the region of a feet space of passengers sitting on passenger seats arranged in the aircraft cabin. Basically, the cabin lining element may be provided with only one opening. It is, however, also conceivable that multiple openings are formed in the cabin lining element.

The decompression assembly further comprises an air channel which is arranged adjacent to a rear face of the cabin lining element. The term "rear face" in this context designates a face of the cabin lining element which, when the cabin lining element is installed in an aircraft cabin, faces away from the interior of the aircraft cabin, i.e. faces an inner face of an aircraft outer skin. The air channel is connected to the opening formed in the cabin lining element. Thus, when the cabin lining element is installed in an aircraft cabin, the opening formed in the cabin lining element allows an air exchange between the aircraft cabin and the air channel. The air channel may extend adjacent to the rear face of the cabin lining element, i.e., when viewed from an interior of the aircraft cabin, behind the cabin lining element substantially parallel to a longitudinal axis of the aircraft cabin.

The air channel is provided with an air outlet which, during normal operation of the decompression assembly, is adapted to discharge air exiting an aircraft cabin region delimited by the cabin lining element through the opening formed in the cabin lining element into an aircraft area located between the cabin lining element and an aircraft outer skin. Thus, during normal operation of the decompression assembly, cabin exhaust air may be guided from the aircraft cabin region delimited by the cabin lining element via the opening formed in the cabin lining element, the air channel and the area outlet of the air channel into the aircraft area located between the cabin lining element and the aircraft outer skin. From the aircraft area located between the cabin lining element and the aircraft outer skin the cabin exhaust air may be directed into a mixing chamber of an aircraft air-conditioning system so as to be recirculated into aircraft cabin or may be discharged overboard, for example via an air outlet valve. The air channel of the decompression assembly further comprises a first decompression opening. A first decompression flap is present which, during normal operation of the decompression assembly, is adapted to close the first decompression opening provided in the air channel. Thus, during normal operation of the decompression assembly, air entering the air channel via the opening provided in the cabin lining element exits the air channel exclusively via the air outlet. The first decompression flap, in the event of a rapid decompression, is adapted to open the first decompression opening so as to allow a pressure equalization between the aircraft cabin region delimited by the cabin lining element and the aircraft area located between the cabin lining element and the aircraft outer skin. Thus, in the event of a sudden pressure drop either in the aircraft cabin region delimited by the cabin lining element or in the aircraft area located between the cabin lining element and the aircraft outer skin, air may flow from the aircraft cabin region delimited by the cabin lining element into the aircraft area located between the cabin lining element and the aircraft outer skin or vice versa via the opening provided in the cabin lining element, the air channel and the first decompression opening.

In the event of a rapid decompression, the decompression assembly allows a quick and reliable pressure equalization between the aircraft cabin region delimited by the cabin lining element and the aircraft area located between the cabin lining element and the aircraft outer skin. In addition, due to the design of the decompression assembly with an air channel arranged adjacent to the rear face of the cabin lining element, the decompression assembly is particularly installation space saving. Moreover, the cabin lining element, in the region of its front face which, when the cabin lining element is installed in an aircraft cabin, faces the interior of the aircraft cabin, can be designed with a substantially flat surface without curvatures protruding into the interior of the aircraft cabin. As a result, the feet space of passengers sitting on passenger seats installed in the aircraft cabin adjacent to the cabin lining element can be increased without affecting the rapid decompression function of the decompression assembly. Finally, sensitive components of the decompression assembly such as for example the first decompression flap are shielded from the interior of the aircraft cabin and hence reliably protected from misuse loads, such as for example foot treads or the like.

In a preferred embodiment of the decompression assembly, the air outlet is formed in a first wall of the air channel. Preferably, the first wall has a first edge which faces the rear face of the cabin lining element and a second edge which faces away from the rear face of the cabin lining element. The first wall of the air channel thus may protrude from the rear face of the cabin lining element. In dependence on the installation requirements and the available installation space, the first wall of the air channel may, for example, extend at an angle of approximately 80 to 100° relative to the rear face of the cabin lining element. Specifically, the first wall of the air channel may extend substantially perpendicular from the rear face of the cabin lining element.

The opening formed in the cabin lining element may be covered by an air permeable grid. Preferably, the grid is designed in such a manner that it does not affect an air flow through the opening formed in the cabin lining element, but protects sensitive components of the decompression assembly such as for example the first decompression flap. For example, the grid may be made of a metal or plastic material which has a strength that is sufficient to withstand misuse loads, such as for example foot treads. Alternatively or additionally thereto, the air outlet formed in the air channel may be covered by an air permeable grid. The grid preferably is designed in such a manner that it does not affect the cabin exhaust air flow through the air outlet, but prevents dirt and dust particles from entering the aircraft area located between the cabin lining element and the aircraft outer skin.

The first decompression opening may be formed in a second wall of the air channel which extends at a distance from the rear face of the cabin lining element opposed to the opening formed in the cabin lining element. In dependence on the installation requirements and the available installation space, the second wall of the air channel may, for example, extend at a distance from the rear face of the cabin lining element and at an angle of approximately -10 to 10° relative to the rear face of the cabin lining element.

Preferably, the first decompression flap is pivotable about a first pivot axis. In the event of a rapid decompression, the first decompression flap may be adapted to pivot around the first pivot axis in a direction away from the rear face of the cabin lining element so as to allow an airflow from the air channel through the first decompression opening into the aircraft area located between the cabin lining element and the aircraft outer skin. Thus, in the event of a sudden pressure drop in the aircraft area located between the cabin lining element and the aircraft outer skin, air from the aircraft cabin region delimited by the cabin lining element may flow through the opening formed in the cabin lining element into the air channel and further through the first decompression opening into the aircraft area located between the cabin lining element and the aircraft outer skin. As a result, a pressure equalization between the aircraft cabin region delimited by the cabin lining element and the aircraft area located between the cabin lining element and the aircraft outer skin is made possible.

The first pivot axis of the first decompression flap may be arranged along an edge of the first decompression flap which faces the air outlet. In particular, the first pivot axis of the first decompression flap may extend along an edge of the first decompression flap which faces the second edge of the first wall of the air channel.

The air channel of the decompression assembly further comprises a second decompression opening. In addition, the air channel comprises a second decompression flap which, during normal operation of the decompression assembly, is adapted to close the second decompression opening provided in the air channel and which, in the event of a rapid decompression, is adapted to open the second decompression opening so as to allow a pressure equalization between the aircraft cabin region delimited by the cabin lining element and the aircraft area located between the cabin lining element and the aircraft outer skin. Thus, in the event of a sudden pressure drop either in the aircraft cabin region delimited by the cabin lining element or in the aircraft area located between the cabin lining element and the aircraft outer skin, air may flow from the aircraft cabin region delimited by the cabin lining element into the aircraft area located between the cabin lining element and the aircraft outer skin or vice versa via the opening provided in the cabin lining element, the air channel and the second decompression opening.

The second decompression opening may be formed in a third wall of the air channel which has a first edge facing the rear face of the cabin lining element and a second edge facing away from the rear face of the cabin lining element. The third wall of the air channel thus may protrude from the rear face of the cabin lining element. In dependence on the installation requirements and the available installation space, the third wall of the air channel may, for example, extend at an angle of approximately 80 to 100° relative to the rear face of the cabin lining element. Specifically, the third wall of the air channel may extend substantially perpendicular from the rear face of the cabin lining element and/or substantially parallel to the first wall of the air channel.

The second decompression flap may be pivotable about a second pivot axis. In the event of a rapid decompression, the second decompression flap may be adapted to pivot in a direction into an interior of the air channel so as to allow an airflow from the aircraft area located between the cabin lining element and the aircraft outer skin into the air channel through the second decompression opening. Thus, in the event of a sudden pressure drop in the aircraft cabin region delimited by the cabin lining element, air from the aircraft area located between the cabin lining element and the aircraft outer skin air may flow through the second decompression opening into the air channel and further through the opening formed in the cabin lining element into the aircraft cabin region delimited by the cabin lining element. As a result, a pressure equalization between the aircraft area located between the cabin lining element and the aircraft outer skin and the aircraft cabin region delimited by the cabin lining element is made possible.

The second pivot axis of the second decompression flap may be arranged along an edge of the second decompression flap which faces away from the rear face of the cabin lining element. In particular, the second pivot axis of the second decompression flap may extend along an edge of the second decompression flap which faces the second wall of the air channel.

A cross-sectional area of the first decompression opening may be larger than a cross-sectional area of the second decompression opening. Correspondingly, a surface area of the first decompression flap may be larger than a surface area of the second decompression flap. Thus, in the event of a sudden pressure drop in the aircraft area located between the cabin lining element and the aircraft outer skin, a particularly quick pressure equalization between the aircraft cabin region delimited by the cabin lining element and the aircraft area located between the cabin lining element and the aircraft outer skin may be achieved.

The first decompression flap may be biased into its closed position by means of a first biasing mechanism. Alternatively or additionally thereto, the second decompression flap may be biased into its closed position by means of a second biasing mechanism. The first and/or the second biasing mechanism may, for example, comprise a spring element or another elastic element which is suitable to apply a biasing force to the first decompression flap and/or the second decompression flap. The biasing force provided by the first and/or the second biasing mechanism may be controlled as desired by a suitable design of the biasing mechanism, for example by equipping the biasing mechanism with a spring element having a desired spring constant.

The first biasing mechanism may be adapted to bias the first decompression flap into its closed position until a pressure difference between the aircraft cabin region delimited by the cabin lining element and the aircraft area located between the cabin lining element and the aircraft outer skin exceeds a rapid decompression threshold value. Similarly, the second biasing mechanism may be adapted to bias the second decompression flap into its closed position until a pressure difference between the aircraft cabin region delimited by the cabin lining element and the aircraft area located between the cabin lining element and the aircraft outer skin exceeds a rapid decompression threshold value.

Thus, during normal operation of the decompression assembly, as long as the biasing force provided by the first and/or the second biasing mechanism exceeds a pressure difference between the aircraft cabin region delimited by the cabin lining element and the aircraft area located between the cabin lining element and the aircraft outer skin, which acts on opposing surfaces of the first and/or the second decompression flap, the first and/or the second decompression flap are held in the closed position without an additional locking mechanism or the like being necessary.

To the contrary, as soon as the pressure difference between the aircraft cabin region delimited by the cabin lining element and the aircraft area located between the cabin lining element and the aircraft outer skin, which acts on opposing surfaces of the first and/or the second decompression flap, exceeds the rapid decompression threshold value and hence the biasing force provided by the first and/or the second biasing mechanism, the first and/or the second decompression flap is/are opened against the biasing action exerted by the first and/or the second biasing mechanism so as to allow a pressure equalization between the aircraft cabin region delimited by the cabin lining element and the aircraft area located between the cabin lining element and the aircraft outer skin.

Further, the first biasing mechanism may be adapted to bias the first decompression flap, after a decompression event, into its closed position again as soon as a pressure difference between the aircraft cabin region delimited by the cabin lining element and the aircraft area located between the cabin lining element and the aircraft outer skin again is lower than the decompression threshold value. Similarly, the second biasing mechanism may be adapted to bias the second decompression flap, after a decompression event, into its closed position again as soon as a pressure difference between the aircraft cabin region delimited by the cabin lining element and the aircraft area located between the cabin lining element and the aircraft outer skin again is lower than the decompression threshold value.

Thus, after pressure equalization between the aircraft cabin region delimited by the cabin lining element and the aircraft area located between the cabin lining element and the aircraft outer skin, when the biasing force provided by the first and/or the second biasing mechanism again exceeds a pressure difference acting on opposing surfaces of the first and/or the second decompression flap, the first and/or the second decompression flap again is/are automatically closed due to the biasing force provided by the first and/or the second biasing mechanism. Manual closing of the first and/or the second decompression flap and or the provision of an automatic closing mechanism for closing of the first and/or the second decompression flap thus is not necessary. The decompression assembly thus has a particularly simple structure and maintenance free structure.

Basically, the cabin lining element of the decompression assembly may be any desired cabin lining element suitable for installation in an aircraft cabin. Preferably, however, the cabin lining elements is dado panel.

An aircraft may be equipped with an above-described decompression assembly.

A preferred embodiment of a decompression assembly for use in an aircraft now will be described in greater detail with reference to the accompanying schematic drawings, wherein
- Figure 1: shows a decompression assembly which is installed in an aircraft during normal operation of the decompression assembly,
- Figure 2: shows the decompression assembly according to figure 1 in the event of a rapid decompression caused by a sudden pressure drop in an aircraft cabin region delimited by the cabin lining element, and
- Figure 3: shows the decompression assembly according to figure 1 in the event of a rapid decompression caused by a sudden pressure drop in an aircraft area located between a cabin lining element of the decompression assembly and an aircraft outer skin.

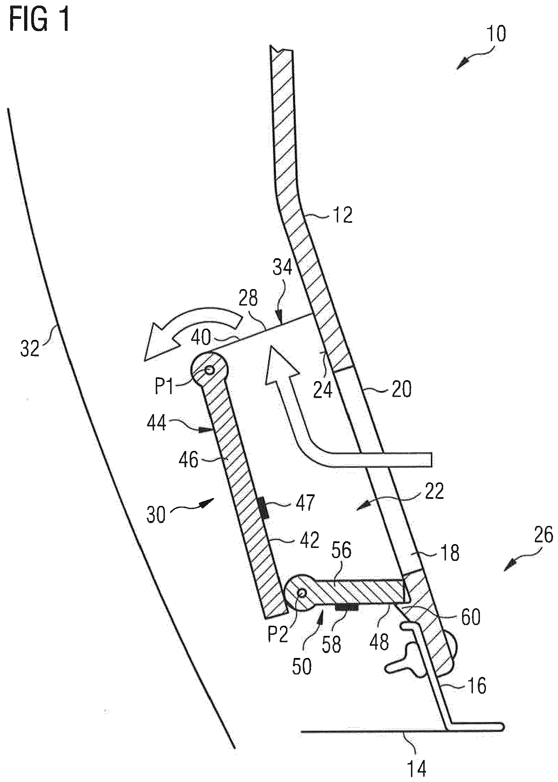

A decompression assembly 10 for use in an aircraft, in particular a passenger aircraft, is represented in figures 1 to 3 and comprises a cabin lining element 12. In the embodiment of a decompression assembly 10 shown in the drawings, the cabin lining element 12 is designed in the form of a dado panel which constitutes a part of a sidewall lining of an aircraft cabin and is arranged adjacent to a cabin floor 14. A gap between a lower edge of the cabin lining element 12 and the cabin floor 14 is closed by means of a cover element 16. An opening 18 is formed in the cabin lining element 12 which is covered by means of an air permeable grid 20. The grid 20 protects components of the decompression assembly 10 which, when the decompression assembly 10 is viewed from an interior of the aircraft cabin, are arranged behind the cabin lining element 12 and which will be described in greater detail below from misuse loads, such as for example foot treads or the like.

In addition, the decompression assembly 10 comprises an air channel 22 which is arranged adjacent to a rear face 24 of the cabin lining element 12. When the decompression assembly 10 is installed in an aircraft cabin as shown in the drawings the rear face 24 of the cabin lining element 12 faces away from an interior of the aircraft cabin. The air channel 22 is connected to the opening 18 formed in the cabin lining element 12. Thus, the opening 18 establishes an air flow path between an aircraft cabin region 26 delimited by the cabin lining element 12 and the air channel 22.

The air channel 22 comprises an air outlet 28 which, during normal operation of the decompression assembly 10, discharges air exiting the aircraft cabin region 26 delimited by the cabin lining element 12 through the opening 18 formed in the cabin lining element 12 into an aircraft area 30 which is located between the cabin lining element 12 and an aircraft outer skin 32, see figure 1. Thus, during normal operation of the decompression assembly 10, cabin exhaust air is guided from the aircraft cabin region 26 delimited by the cabin lining element 12 via the opening 18, the air channel 22 and the area outlet 28 into the aircraft area 30 located between the cabin lining element 12 and the aircraft outer skin 32.

The air outlet 28 is formed in a first wall 34 of the air channel 22 which has a first edge facing the rear face 24 of the cabin lining element 12 and a second edge facing away from the rear face 24 of the cabin lining element 12. In the embodiment of a decompression assembly 10 shown in the drawings, the first wall 34 extends substantially perpendicular from the rear face 24 of the cabin lining element 12. The outlet 28 is covered by an air permeable grid 40. The grid 40 prevents dirt and dust particles from entering the aircraft area 30 located between the cabin lining element 12 and the aircraft outer skin 32.

The air channel 22 of the decompression assembly 10 further comprises a first decompression opening 42. The first decompression opening 42 is formed in a second wall 44 of the air channel 22 which extends at a distance from the rear face 24 of the cabin lining element 12 opposed to the opening 18 formed in the cabin lining element 12. In particular, the second wall 44 of the air channel 22 extends substantially parallel to a portion of the rear face 24 of the cabin lining element 12 which surrounds the opening 18.

A first decompression flap 46 is present which, during normal operation of the decompression assembly 10, closes the first decompression opening 42 provided in the air channel 22 as shown in figure 1. The first decompression flap 46 is pivotable about a first pivot axis P1 which extends along an edge of the first decompression flap 46 which faces the air outlet 28, in particular the second edge of the first wall 34 of the air channel 22. A first biasing mechanism 47 serves to bias the first decompression flap 46 into its closed position.

The decompression assembly 10 also comprises a second decompression opening 48 which is formed in a third wall 50 of the air channel 22. The second decompression opening 48 has a cross-sectional area which is smaller than a cross-sectional area of the first decompression opening 42. The third wall 50 of the air channel 22 has a first edge facing the rear face 24 of the cabin lining element 12 and a second edge facing away from the rear face 24 of the cabin lining element 12. In the embodiment of a decompression assembly 10 shown in the drawings, the third wall 50 of the air channel 22 extends substantially perpendicular from the rear face 24 of the cabin lining element 12 and substantially parallel to the first wall 34 of the air channel 22.

The second decompression flap 56, during normal operation of the decompression assembly 10, closes the second decompression opening 48 provided in the air channel 22, see figure 1. Thus, during normal operation of the decompression assembly 10, air entering the air channel 22 via the opening 18 provided in the cabin lining element 12 exits the air channel 22 exclusively via the air outlet 28. The second decompression flap 56 is pivotable about a second pivot axis P2 which extends along an edge of the second decompression flap 56 which faces away from the rear face 24 of the cabin lining element 12 and which is arranged adjacent to the second wall 44 of the air channel 22. A second biasing mechanism 48 serves to bias the second decompression flap 56 into its closed position. In its closed position, an edge of the second decompression flap 56 which faces the rear face 24 of the cabin lining element 12 abuts against an abutting element 60 which, in the embodiment of a decompression assembly 10 shown in the drawings, is formed integral with the cabin lining element 12 and protrudes from the rear face 24 of the cabin lining element 12.

In the event of a rapid decompression, the first decompression flap 46 is adapted to open the first decompression opening 42 so as to allow a pressure equalization between the aircraft cabin region 26 delimited by the cabin lining element 12 and the aircraft area 30 located between the cabin lining element 12 and the aircraft outer skin 32. Similarly, the second decompression flap 56 is adapted to open the second decompression opening 48 so as to allow a pressure equalization between the aircraft cabin region 26 delimited by the cabin lining element 12 and the aircraft area 30 located between the cabin lining element 12 and the aircraft outer skin 32.

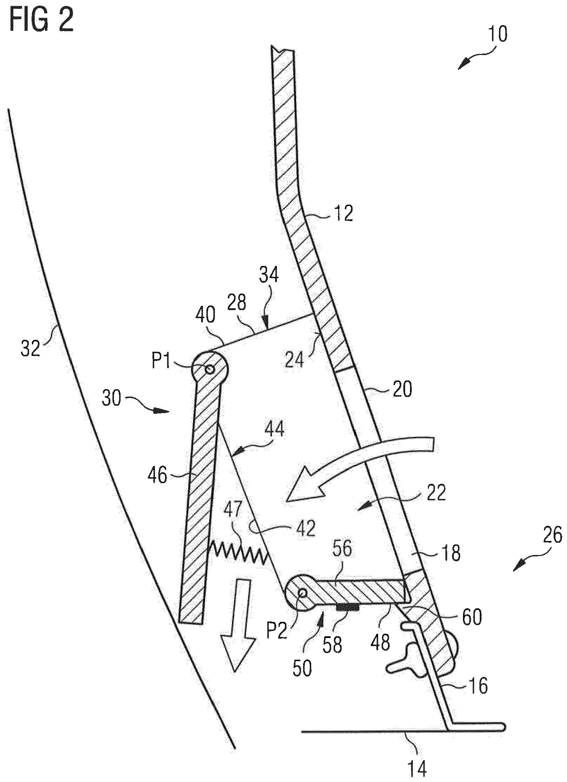

Specifically, if in the event of a rapid decompression which is caused by a sudden pressure drop in the aircraft area 30 located between the cabin lining element 12 and the aircraft outer skin 32 a pressure difference between the aircraft area 30 located between the cabin lining element 12 and the aircraft outer skin 32 and the aircraft cabin region 26 delimited by the cabin lining element 12 exceeds a rapid decompression threshold value, the pressure difference acting on opposing side faces of the first decompression flap 46 exceeds the biasing force which is applied to the first decompression flap 46 by the first biasing mechanism 47. As a result, as shown in figure 2, the first decompression flap 46 pivots about the first pivot axis P1 in a direction away from the rear face 24 of the cabin lining element 12 so as to open the first decompression opening 42 and to allow an air flow from the air channel 22 through the first decompression opening 42.

Thus, air may flow from the aircraft cabin region 26 delimited by the cabin lining element 12 into the aircraft area 30 located between the cabin lining element 12 and the aircraft outer skin 32 via the opening 18 provided in the cabin lining element 12, the air channel 22 and the first decompression opening 42. Hence, a pressure equalization between the aircraft cabin region 26 delimited by the cabin lining element 12 and the aircraft area 30 located between the cabin lining element 12 and the aircraft outer skin 32 is made possible.

Contrary to the first decompression flap 46, in the event of a rapid decompression caused by a sudden pressure drop in the aircraft area 30 located between the cabin lining element 12 and the aircraft outer skin 32, the second decompression flap 56, due to the interaction of the edge of the second decompression flap 56 which faces the rear face 24 of the cabin lining element 12 with the abutting element 60 is maintained in its closed position. After the decompression event, i.e. as soon as a pressure difference between the aircraft area 30 located between the cabin lining element 12 and the aircraft outer skin 32 and the aircraft cabin region 26 delimited by the cabin lining element 12 again is lower than the decompression threshold value, the first biasing mechanism 47 biases the first decompression flap 46 in a direction towards the rear face 24 of the cabin lining element 12 back into its closed position.

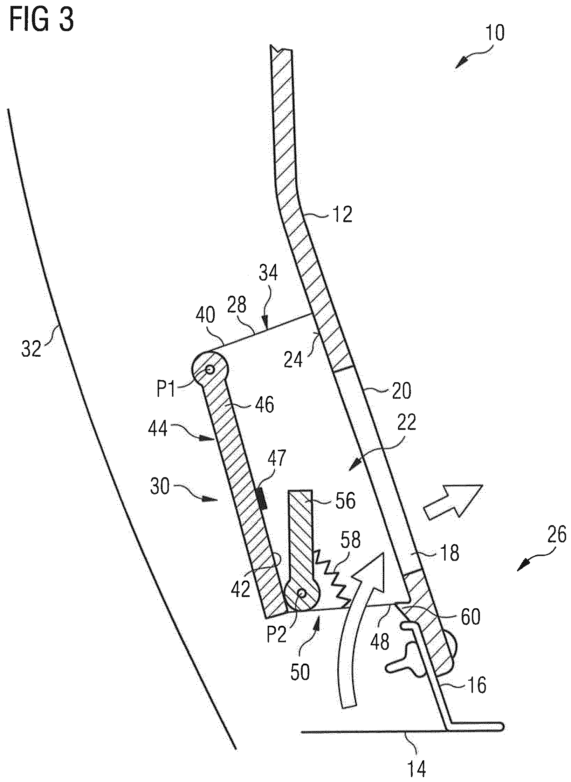

If in the event of a rapid decompression caused by a sudden pressure drop in the aircraft cabin region 26 delimited by the cabin lining element 12 a pressure difference between the aircraft cabin region 26 delimited by the cabin lining element 12 and the aircraft area 30 located between the cabin lining element 12 and the aircraft outer skin 32 exceeds a rapid decompression threshold value, the pressure difference acting on opposing side faces of the second decompression flap 56 exceeds the biasing force which is applied to the second decompression flap 56 by the second biasing mechanism 58. As a result, as shown in figure 3, the second decompression flap 56 pivots about the second pivot axis P2 in a direction into an interior of the air channel 22 so as to open the second decompression opening 48 and to allow an air flow from the aircraft area 30 located between the cabin lining element 12 and the aircraft outer skin 32 into the air channel 22 through the second decompression opening 48.

Thus, air may flow from the aircraft area 30 located between the cabin lining element 12 and the aircraft outer skin 32 through the second decompression opening 48 into the air channel 22 and further through the opening 18 formed in the cabin lining element 12 into the aircraft cabin region 26 delimited by the cabin lining element 12. Hence, a pressure equalization between the aircraft area 30 located between the cabin lining element 12 and the aircraft outer skin 32 and the aircraft cabin region 26 delimited by the cabin lining element 12 is made possible.

Contrary to the second decompression flap 56, in the event of a rapid decompression caused by a sudden pressure drop in the aircraft cabin region 26 delimited by the cabin lining element 12, the first decompression flap 46 is maintained in its closed position. After the decompression event, i.e. as soon as a pressure difference between the aircraft cabin region 26 delimited by the cabin lining element 12 and the aircraft area 30 located between the cabin lining element 12 and the aircraft outer skin 32 again is lower than the decompression threshold value, the second biasing mechanism 58 biases the second decompression flap 56 in a direction towards the third wall 50 of the air channel 22 back into its closed position until the edge of the second decompression flap 56 which faces the rear face 24 of the cabin lining element 12 again abuts against the abutting element 60.

## Claims

1. Decompression assembly (10) for use in an aircraft, the decompression assembly (10) comprising:
- a cabin lining element (12),
- an opening (18) formed in the cabin lining element (12), and
- an air channel (22) which is arranged adjacent to a rear face (24) of the cabin lining element (12) and connected to the opening (18) formed in the cabin lining element (12), whe
rein the air channel (22) is provided with
an air outlet (28) which, during normal operation of the decompression assembly (10), is adapted to discharge air exiting an aircraft cabin region (26) delimited by the cabin lining element (12) through the opening (18) formed in the cabin lining element (12) into an aircraft area (30) located between the cabin lining element (12) and an aircraft outer skin (32),
a first decompression opening (42), and
a first decompression flap (46) which, during normal operation of the decompression assembly (10), is adapted to close the first decompression opening (42) provided in the air channel (22) and which, in the event of a rapid decompression, is adapted to open the first decompression opening (42) so as to allow a pressure equalization between the aircraft cabin region (26) delimited by the cabin lining element (12) and the aircraft area (30) located between the cabin lining element (12) and the aircraft outer skin (32);
**characterized in that**
the air channel (22) further comprises:
a second decompression opening (48), and
a second decompression flap (56) which, during normal operation of the decompression assembly (10), is adapted to close the second decompression opening (48) provided in the air channel (22) and which, in the event of a rapid decompression, is adapted to open the second decompression opening (48) so as to allow a pressure equalization between the aircraft cabin region (26) delimited by the cabin lining element (12) and the aircraft area (30) located between the cabin lining element (12) and the aircraft outer skin (32).

2. Decompression assembly according to claim 1,
wherein the air outlet (28) is formed in a first wall (34) of the air channel (22) which has a first edge facing the rear face (24) of the cabin lining element (12) and a second edge facing away from the rear face (24) of the cabin lining element (12), and/or wherein at least one of the opening (18) formed in the cabin lining element (12) and the air outlet (28) formed in the air channel (22) is covered by an air permeable grid (20, 40).

3. Decompression assembly according to claim 1 or 2,
wherein the first decompression opening (42) is formed in a second wall (44) of the air channel (22) which is distanced from the rear face (24) of the cabin lining element (12) and opposed to the opening (18) formed in the cabin lining element (12).

4. Decompression assembly according to any one of claims 1 to 3,
wherein the first decompression flap (46) is pivotable about a first pivot axis (P1) and, in the event of a rapid decompression, is adapted to pivot in a direction away from the rear face (24) of the cabin lining element (12) so as to allow an airflow from the air channel (22) through the first decompression opening (42) into the aircraft area (30) located between the cabin lining element (12) and the aircraft outer skin (32), wherein, optionally, the first pivot axis (P1) of the first decompression flap (46) is arranged along an edge of the first decompression flap (46) which faces the air outlet (28).

5. Decompression assembly according to any one of claims 1 to 4,
wherein the first decompression flap (46) is biased into its closed position by means of a biasing mechanism (47).

6. Decompression assembly according to claim 5,
wherein the biasing mechanism (47) is adapted to bias the first decompression flap (46) into its closed position until a pressure difference between the aircraft cabin region (26) delimited by the cabin lining element (12) and the aircraft area (30) located between the cabin lining element (12) and the aircraft outer skin (32) exceeds a rapid decompression threshold value and further is adapted to bias the first decompression flap (46), after a rapid decompression event, into its closed position again as soon as a pressure difference between the aircraft cabin region (26) delimited by the cabin lining element (12) and the aircraft area (30) located between the cabin lining element (12) and the aircraft outer skin (32) again is lower than the rapid decompression threshold value.

7. Decompression assembly according to any one of claims 1 to 6,
wherein the second decompression opening (48) is formed in a third wall (50) of the air channel (22) which has a first edge facing the rear face (24) of the cabin lining element (12) and a second edge facing away from the rear face (24) of the cabin lining element (12).

8. Decompression assembly according to any one of claims 1 to 7,
wherein the second decompression flap (56) is pivotable about a second pivot axis (P2) and, in the event of a rapid decompression, is adapted to pivot in a direction into an interior of the air channel (22) so as to allow an airflow from the aircraft area (30) located between the cabin lining element (12) and the aircraft outer skin (32) into the air channel (22) through the second decompression opening (48).

9. Decompression assembly according to claim 8,
wherein the second pivot axis (P2) of the second decompression flap (56) is arranged along an edge of the second decompression flap (56) which faces away from the rear face (24) of the cabin lining element (12).

10. Decompression assembly according to any one of claims 1 to 9,
wherein a cross-sectional area of the first decompression opening (42) is larger than a cross-sectional area of the second decompression opening (48).

11. Decompression assembly according to any one of claims 1 to 10,
wherein the second decompression flap (56) is biased into its closed position by means of a biasing mechanism (58).

12. Decompression assembly according to claim 11,
wherein the biasing mechanism (58) is adapted to bias the second decompression flap (56) into its closed position until a pressure difference between the aircraft cabin region (26) delimited by the cabin lining element (12) and the aircraft area (30) located between the cabin lining element (12) and the aircraft outer skin (32) exceeds a rapid decompression threshold value and further is adapted to bias the second decompression flap (56), after a rapid decompression event, into its closed position again as soon as a pressure difference between the aircraft cabin region (26) delimited by the cabin lining element (12) and the aircraft area (30) located between the cabin lining element (12) and the aircraft outer skin (32) again is lower than the rapid decompression threshold value.

13. Decompression assembly according to any one of claims 1 to 12,
wherein the cabin lining element (12) is a dado panel.

14. Aircraft equipped with a decompression assembly according to any one of claims 1 to 13.

## Patentansprüche

1. Dekompressionsanordnung (10) zur Verwendung in einem Luftfahrzeug, wobei die Dekompressionsanordnung (10) Folgendes umfasst:
- ein Kabinenverkleidungselement (12),
- eine im Kabinenverkleidungselement (12) ausgebildete Öffnung (18) und
- einen an eine Rückseite (24) des Kabinenverkleidungselements (12) und mit der im Kabinenverkleidungselement (12) ausgebildeten Öffnung (18) verbundenen Luftkanal (22),
wobei der Luftkanal (22) mit Folgendem versehen ist:
einem Luftauslass (28), der bei Normalbetrieb der Dekompressionsanordnung (10) dazu eingerichtet ist, Luft, die einen durch das Kabinenverkleidungselement (12) begrenzten Flugzeugkabinenbereich (26) durch die im Kabinenverkleidungselement (12) ausgebildete Öffnung (18) in einen zwischen dem Kabinenverkleidungselement (12) und einer Flugzeugaußenhaut (32) angeordneten Flugzeugbereich (30) verlässt, abzulassen,
einer ersten Dekompressionsöffnung (42) und
einer ersten Dekompressionsklappe (46), die im Normalbetrieb der Dekompressionsanordnung (10) dazu eingerichtet ist, die im Luftkanal (22) vorgesehene erste Dekompressionsöffnung (42) zu schließen, und die im Falle einer schnellen Dekompression dazu eingerichtet ist, die erste Dekompressionsöffnung (42) zu öffnen, um einen Druckausgleich zwischen dem durch das Kabinenverkleidungselement (12) begrenzten Flugzeugkabinenbereich (26) und dem zwischen Kabinenverkleidungselement (12) und der Flugzeugaußenhaut (32) angeordneten Flugzeugbereich (30) zuzulassen;
**dadurch gekennzeichnet, dass**
der Luftkanal (22) ferner Folgendes umfasst:
eine zweite Dekompressionsöffnung (48) und
eine zweite Dekompressionsklappe (56), die im Normalbetrieb der Dekompressionsanordnung (10) dazu eingerichtet ist, die im Luftkanal (22) vorgesehene zweite Dekompressionsöffnung (48) zu schließen, und die im Falle einer schnellen Dekompression dazu eingerichtet ist, die zweite Dekompressionsöffnung (48) zu öffnen, um einen Druckausgleich zwischen dem durch das Kabinenverkleidungselement (12) begrenzten Flugzeugkabinenbereich (26) und dem zwischen Kabinenverkleidungselement (12) und der Flugzeugaußenhaut (32) angeordneten Flugzeugbereich (30) zuzulassen.

2. Dekompressionsanordnung nach Anspruch 1,
wobei der Luftauslass (28) in einer ersten Wand (34) des Luftkanals (22) ausgebildet ist, dessen erste Kante der Rückseite (24) des Kabinenverkleidungselements (12) zugewandt ist und dessen zweite Kante von der Rückseite (24) des Kabinenverkleidungselements (12) abgewandt ist, und/oder wobei die im Kabinenverkleidungselement (12) ausgebildete Öffnung (18) und/oder der im Luftkanal (22) ausgebildete Luftauslass (28) von einem luftdurchlässigen Gitter (20, 40) bedeckt ist.

3. Dekompressionsanordnung nach Anspruch 1 oder 2,
wobei die erste Dekompressionsöffnung (42) in einer zweiten Wand (44) des Luftkanals (22) ausgebildet ist, die von der Rückseite (24) des Kabinenverkleidungselements (12) beabstandet und der im Kabinenverkleidungselement (12) ausgebildeten Öffnung (18) entgegengesetzt ist.

4. Dekompressionsanordnung nach einem der Ansprüche 1 bis 3,
wobei die erste Dekompressionsklappe (46) um eine erste Schwenkachse (P1) verschwenkbar ist und im Falle einer schnellen Dekompression dazu eingerichtet ist, sich in eine Richtung von der Rückseite (24) des Kabinenverkleidungselements (12) weg zu verschwenken, um einen Luftstrom vom Luftkanal (22) durch die erste Dekompressionsöffnung (42) in den zwischen dem Kabinenverkleidungselement (12) und der Flugzeugaußenhaut (32) angeordneten Flugzeugbereich (30) zuzulassen, wobei die erste Schwenkachse (P1) der ersten Dekompressionsklappe (46) optional entlang einer Kante der ersten Dekompressionsklappe (46) angeordnet ist, die dem Luftauslass (28) zugewandt ist.

5. Dekompressionsanordnung nach einem der Ansprüche 1 bis 4,
wobei die erste Dekompressionsklappe (46) mittels eines Vorspannungsmechanismus (47) in ihre geschlossene Stellung vorgespannt ist.

6. Dekompressionsanordnung nach Anspruch 5,
wobei der Vorspannungsmechanismus (47) dazu eingerichtet ist, die erste Dekompressionsklappe (46) in ihre geschlossene Stellung vorzuspannen, bis ein Druckunterschied zwischen dem durch das Kabinenverkleidungselement (12) begrenzten Flugzeugkabinenbereich (26) und dem zwischen dem Kabinenverkleidungselement (12) und der Flugzeugaußenhaut (32) angeordneten Flugzeugbereich (30) einen Schwellenwert für die schnelle Dekompression überschreitet, und ferner dazu eingerichtet ist, die erste Dekompressionsklappe (46) nach einem Fall der schnellen Dekompression wieder in ihre geschlossene Stellung vorzuspannen, sobald der Druckunterschied zwischen dem durch das Kabinenverkleidungselement (12) begrenzten Flugzeugkabinenbereich (26) und dem zwischen dem Kabinenverkleidungselement (12) und der Flugzeugaußenhaut (32) angeordneten Flugzeugbereich (30) wieder niedriger als der Schwellenwert für die schnelle Dekompression ist.

7. Dekompressionsanordnung nach einem der Ansprüche 1 bis 6,
wobei die zweite Dekompressionsöffnung (48) in einer dritten Wand (50) des Luftkanals (22) ausgebildet ist, die eine erste Kante, die der Rückseite (24) des Kabinenverkleidungselements (12) zugewandt ist, und eine zweite Kante, die von der Rückseite (24) des Kabinenverkleidungselements (12) abgewandt ist, aufweist.

8. Dekompressionsanordnung nach einem der Ansprüche 1 bis 7,
wobei die zweite Dekompressionsklappe (56) um eine zweite Schwenkachse (P2) verschwenkbar ist und im Falle einer schnellen Dekompression dazu eingerichtet ist, sich in eine Richtung des Inneren des Luftkanals (22) zu verschwenken, um einen Luftstrom von dem zwischen dem Kabinenverkleidungselement (12) und der Flugzeugaußenhaut (32) angeordneten Flugzeugbereich (30) durch die zweite Dekompressionsöffnung (48) in den Luftkanal (22) zuzulassen.

9. Dekompressionsanordnung nach Anspruch 8,
wobei die zweite Schwenkachse (P2) der zweiten Dekompressionsklappe (56) entlang einer Kante der zweiten Dekompressionsklappe (56) angeordnet ist, die von der Rückseite (24) des Kabinenverkleidungselements (12) abgewandt ist.

10. Dekompressionsanordnung nach einem der Ansprüche 1 bis 9,
wobei eine Querschnittsfläche der ersten Dekompressionsöffnung (42) größer als eine Querschnittsfläche der zweiten Dekompressionsöffnung (48) ist.

11. Dekompressionsanordnung nach einem der Ansprüche 1 bis 10,
wobei die zweite Dekompressionsklappe (56) mittels eines Vorspannungsmechanismus (58) in ihre geschlossene Stellung vorgespannt ist.

12. Dekompressionsanordnung nach Anspruch 11,
wobei der Dekompressionsmechanismus (58) dazu eingerichtet ist, die zweite Dekompressionsklappe (56) in ihre geschlossene Stellung vorzuspannen, bis ein Druckunterschied zwischen dem durch das Kabinenverkleidungselement (12) begrenzten Flugzeugkabinenbereich (26) und dem zwischen dem Kabinenverkleidungselement (12) und der Flugzeugaußenhaut (32) angeordneten Flugzeugbereich (30) einen Schwellenwert für die schnelle Dekompression überschreitet, und ferner dazu eingerichtet ist, die zweite Dekompressionsklappe (56) nach einem Fall der schnellen Dekompression wieder in ihre geschlossene Stellung vorzuspannen, sobald der Druckunterschied zwischen dem durch das Kabinenverkleidungselement (12) begrenzten Flugzeugkabinenbereich (26) und dem zwischen dem Kabinenverkleidungselement (12) und der Flugzeugaußenhaut (32) angeordneten Flugzeugbereich (30) wieder niedriger als der Schwellenwert für die schnelle Dekompression ist.

13. Dekompressionsanordnung nach einem der Ansprüche 1 bis 12,
wobei das Kabinenverkleidungselement (12) ein Dado-Paneel ist.

14. Flugzeug, das mit einer Dekompressionsanordnung nach einem der Ansprüche 1 bis 13 ausgestattet ist.

## Revendications

1. Ensemble de décompression (10) destiné à être utilisé dans un aéronef, cet ensemble de décompression (10) comprenant :
- un élément de revêtement intérieur de la cabine (12),
- une ouverture (18) formée dans l'élément de revêtement intérieur de la cabine (12), et
- un conduit d'air (22) qui est disposé de façon adjacente à une face arrière (24) de l'élément de revêtement intérieur de la cabine (12) et qui est relié à l'ouverture (18) formée dans l'élément de revêtement intérieur de la cabine (12),
ce conduit d'air (22) étant pourvu de :
une sortie d'air (28) qui, pendant le fonctionnement normal de l'ensemble de décompression (10), est adaptée de façon à décharger de l'air sortant d'une région de la cabine de l'aéronef (26) délimitée par l'élément de revêtement intérieur de la cabine (12) à travers l'ouverture (18) formée dans l'élément de revêtement intérieur de la cabine (12) dans une zone de l'aéronef (30) située entre l'élément de revêtement intérieur de la cabine (12) et un revêtement extérieur de l'aéronef (32),
une première ouverture de décompression (42), et
un premier volet de décompression (46) qui, pendant le fonctionnement normal de l'ensemble de décompression (10), est adapté de façon à fermer la première ouverture de décompression (42) prévue dans le conduit d'air (22) et qui, dans le cas d'une décompression rapide, est adapté de façon à ouvrir la première ouverture de décompression (42) de manière à permettre une égalisation de la pression entre la région de la cabine de l'aéronef (26) délimitée par l'élément de revêtement intérieur de la cabine (12) et la zone de l'aéronef (30) située entre l'élément de revêtement intérieur de la cabine (12) et le revêtement extérieur de l'aéronef (32) ;
**caractérisé en ce que**
le conduit d'air (22) comprend en outre :
une deuxième ouverture de décompression (48), et
un deuxième volet de décompression (56) qui, pendant le fonctionnement normal de l'ensemble de décompression (10), est adapté de façon à fermer la deuxième ouverture de décompression (48) prévue dans le conduit d'air (22) et qui, dans le cas d'une décompression rapide, est adapté de façon à ouvrir la deuxième ouverture de décompression (48) de manière à permettre une égalisation de la pression entre la région de la cabine de l'aéronef (26) délimitée par l'élément de revêtement intérieur de la cabine (12) et la zone de l'aéronef (30) située entre l'élément de revêtement intérieur de la cabine (12) et le revêtement extérieur de l'aéronef (32).

2. Ensemble de décompression selon la revendication 1,
dans lequel la sortie d'air (28) est formée dans une première paroi (34) du conduit d'air (22) qui a un premier bord tourné vers la face arrière (24) de l'élément de revêtement intérieur de la cabine (12) et un deuxième bord tourné dans une direction opposée à la face arrière (24) de l'élément de revêtement intérieur de la cabine (12), et/ou dans lequel au moins soit l'ouverture (18) formée dans l'élément de revêtement intérieur de la cabine (12), soit la sortie d'air (28) formée dans le conduit d'air (22) est couverte par une grille perméable à l'air (20, 40).

3. Ensemble de décompression selon la revendication 1 ou 2,
dans lequel la première ouverture de décompression (42) est formée dans une deuxième paroi (44) du conduit d'air (22) qui est écartée de la face arrière (24) de l'élément de revêtement intérieur de la cabine (12) et qui est opposée à l'ouverture (18) formée dans l'élément de revêtement intérieur de la cabine (12).

4. Ensemble de décompression selon l'une quelconque des revendications 1 à 3, dans lequel le premier volet de décompression (46) est capable de pivoter autour d'un premier axe de pivotement (P1) et, dans le cas d'une décompression rapide, est adapté de façon à pivoter dans une direction opposée à la face arrière (24) de l'élément de revêtement intérieur de la cabine (12) afin de permettre un écoulement d'air depuis le conduit d'air (22) à travers la première ouverture de décompression (42) dans la zone de l'aéronef (30) située entre l'élément de revêtement intérieur de la cabine (12) et le revêtement extérieur de l'aéronef (32), dans lequel, facultativement, le premier axe de pivotement (P1) du premier volet de décompression (46) est disposé le long d'un bord du premier volet de décompression (46) qui est tourné vers la sortie d'air (28).

5. Ensemble de décompression selon l'une quelconque des revendications 1 à 4, dans lequel le premier volet de décompression (46) est sollicité dans sa position fermée au moyen d'un mécanisme de sollicitation (47).

6. Ensemble de décompression selon la revendication 5,
dans lequel le mécanisme de sollicitation (47) est adapté de façon à solliciter le premier volet de décompression (46) dans sa position fermée jusqu'à ce qu'une différence de pression entre la région de la cabine de l'aéronef (26) délimitée par l'élément de revêtement intérieur de la cabine (12) et la zone de l'aéronef (30) située entre l'élément de revêtement intérieur de la cabine (12) et le revêtement extérieur de l'aéronef (32) dépasse une valeur de seuil de décompression rapide et est adapté en outre de façon à solliciter le premier volet de décompression (46), après un événement de décompression rapide, dans sa position fermée encore une fois dès qu'une différence de pression entre la région de la cabine de l'aéronef (26) délimitée par l'élément de revêtement intérieur de la cabine (12) et la zone de l'aéronef (30) située entre l'élément de revêtement intérieur de la cabine (12) et le revêtement extérieur de l'aéronef (32) est encore une fois plus basse que la valeur du seuil de décompression rapide.

7. Ensemble de décompression selon l'une quelconque des revendications 1 à 6, dans lequel la deuxième ouverture de décompression (48) est formée dans une troisième paroi (50) du conduit d'air (22) qui a un premier bord tourné vers la face arrière (24) de l'élément de revêtement intérieur de la cabine (12) et un deuxième bord tourné dans une direction opposée à la face arrière (24) de l'élément de revêtement intérieur de la cabine (12).

8. Ensemble de décompression selon l'une quelconque des revendications 1 à 7, dans lequel le deuxième volet de décompression (56) est capable de pivoter autour d'un deuxième axe de pivotement (P2) et, dans le cas d'une décompression rapide, est adapté de façon à pivoter dans une direction dans un intérieur du conduit d'air (22) afin de permettre un écoulement d'air depuis la zone de l'aéronef (30) située entre l'élément de revêtement intérieur de la cabine (12) et le revêtement extérieur de l'aéronef (32) dans le conduit d'air (22) à travers la deuxième ouverture de décompression (48).

9. Ensemble de décompression selon la revendication 8,
dans lequel le deuxième axe de pivotement (P2) du deuxième volet de décompression (56) est disposé le long d'un bord du deuxième volet de décompression (56) qui est tourné dans une direction opposée à la face arrière (24) de l'élément de revêtement intérieur de la cabine (12).

10. Ensemble de décompression selon l'une quelconque des revendications 1 à 9, dans lequel une surface de section transversale de la première ouverture de décompression (42) est plus grande qu'une surface de section transversale de la deuxième ouverture de décompression (48).

11. Ensemble de décompression selon l'une quelconque des revendications 1 à 10, dans lequel le deuxième volet de décompression (56) est sollicité dans sa position fermée au moyen d'un mécanisme de sollicitation (58).

12. Ensemble de décompression selon la revendication 11,
dans lequel le mécanisme de sollicitation (58) est adapté de façon à solliciter le deuxième volet de décompression (56) dans sa position fermée jusqu'à ce qu'une différence de pression entre la région de la cabine de l'aéronef (26) délimitée par l'élément de revêtement intérieur de la cabine (12) et la zone de l'aéronef (30) située entre l'élément de revêtement intérieur de la cabine (12) et le revêtement extérieur de l'aéronef (32) dépasse une valeur de seuil de décompression rapide et est adapté en outre de façon à solliciter le deuxième volet de décompression (56), après un évènement de décompression rapide, dans sa position fermée encore une fois dès qu'une différence de pression entre la région de la cabine de l'aéronef (26) délimitée par l'élément de revêtement intérieur de la cabine (12) et la zone de l'aéronef (30) située entre l'élément de revêtement intérieur de la cabine (12) et le revêtement extérieur de l'aéronef (32) est encore une fois plus basse que la valeur du seuil de décompression rapide.

13. Ensemble de décompression selon l'une quelconque des revendications 1 à 12, dans lequel l'élément de revêtement intérieur de la cabine (12) est un panneau Dado.

14. Aéronef équipé d'un ensemble de décompression selon l'une quelconque des revendications 1 à 13.
